(19) Europäisches Patentamt
European Patent Office
Office européen des brevets

(11) **EP 2 149 588 B1**

(12) **EUROPEAN PATENT SPECIFICATION**

(45) Date of publication and mention
of the grant of the patent:
**15.05.2013 Bulletin 2013/20**

(21) Application number: **08722156.0**

(22) Date of filing: **14.03.2008**

(51) Int Cl.:
*C08L 7/00* (2006.01)  *B60C 1/00* (2006.01)
*B60C 15/06* (2006.01)  *C08L 93/04* (2006.01)
*C08L 15/00* (2006.01)  *C08L 45/00* (2006.01)
*C08K 3/04* (2006.01)  *C08K 3/36* (2006.01)

(86) International application number:
**PCT/JP2008/054760**

(87) International publication number:
**WO 2008/142902 (27.11.2008 Gazette 2008/48)**

(54) **RUBBER COMPOSITION AND PNEUMATIC TIRE USING THE SAME**

KAUTSCHUKZUSAMMENSETZUNG UND LUFTREIFEN DAMIT

COMPOSITION DE CAOUTCHOUC ET PNEU L'UTILISANT

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **22.05.2007 JP 2007135650
08.06.2007 JP 2007153067
08.06.2007 JP 2007153053
21.06.2007 JP 2007164086
21.06.2007 JP 2007164158**

(43) Date of publication of application:
**03.02.2010 Bulletin 2010/05**

(73) Proprietor: **Sumitomo Rubber Industries, Ltd.
Kobe-shi, Hyogo 651-0072 (JP)**

(72) Inventors:
• **SAKAMOTO, Shuichi
Kobe-shi
Hyogo 651-0072 (JP)**
• **NAKAKITA, Issei
Kobe-shi
Hyogo 651-0072 (JP)**

(74) Representative: **Manitz, Finsterwald & Partner
GbR
Martin-Greif-Strasse 1
80336 München (DE)**

(56) References cited:
EP-A1- 1 288 022    EP-A1- 1 288 253
EP-A2- 0 941 871    JP-A- 2003 063 206
JP-A- 2003 064 222    JP-A- 2006 063 093
JP-A- 2006 249 188    JP-A- 2007 099 932
JP-A- 2007 177 209    JP-A- 2007 231 085
JP-A- 2007 321 093

• **DATABASE WPI Week 200571 Thomson
Scientific, London, GB; AN 2005-685065
XP002613503, & JP 2005 248056 A (SUMITOMO
RUBBER IND LTD) 15 September 2005
(2005-09-15)**

**Description**

TECHNICAL FIELD

The present invention relates to a rubber composition and a pneumatic tire using the same.

BACKGROUND ART

Recently, with increased interest in environmental problems, a method for reducing a use amount of a raw material derived from a petroleum source has been studied in a variety of technical fields. A half or more of a total weight of a tire being generally sold now is constituted of a raw material being a petroleum source. For example, since a tire for a general passenger automobile contains such as about 20% by mass of a synthetic rubber, about 20% by mass of carbon black, a softening agent and a synthetic fiber, about 50% by mass or more of a whole tire is constituted of a raw material of the petroleum source. In addition, for the purpose of improving processibility by improvement in stickiness and reduction in a viscosity, a stickiness imparting agent is blended into the rubber composition for a tire and, as this stickiness imparting agent, a resin derived from a petroleum source such as a C5-based resin, a C9-based resin, and a phenol-based resin is generally used. Then, development of a rubber for a tire using a raw material derived from a natural source satisfying the required properties equivalent to or exceeding those when a raw material derived from a petroleum source is used, is desired.

Here, for the purpose of providing a tread rubber composition satisfying industrial workability, and by which performance excellent in the gripping property is obtained, a tread rubber composition in which 100 to 150 parts by weight of a terpene-based resin is compounded based on 100 parts by weight of a diene-based rubber is known. In addition, the technique capable of providing a rubber composition for a tire, which is a substitute for a petroleum-based aroma oil, and gives a small load on the environment, by containing 50 parts by weight or more of a natural rubber or a polyisoprene rubber among diene-based rubber components, and compounding 1 to 50 parts by weight of a terpene resin having a specified dynamic viscosity, is also known. Further, for the similar object, a rubber composition for a tire tread containing 50 parts by weight or more of a natural rubber among diene-based rubber components, and containing a reinforcing filler containing 60% by weight or more of silica, and in which 0.5 to 15 parts by weight of a phenol-modified terpene resin having a specified softening point, a specified hydroxy value and a specified dynamic viscosity is compounded therein, is also known. However, since these rubber compositions reduce a load on the environment by compounding a large amount of a natural source material without compounding a petroleum-based resin, but a rubber composition for a side wall, and performance required by this are not considered at all, and processibility is not sufficient. However, these rubber compositions reduce a load on the environment by compounding a large amount of a natural source material without compounding a petroleum-based resin, but application of various members (a clinch rubber, a base tread part adjacent to an inner side of a cap tread part, a rubber composition for a carcass ply, a bead apex etc.), and performance required for each of them are not considered at all, and processibility is not sufficient.

In addition, Japanese Patent Laying-Open No.11-11106 (Patent Document 1) discloses a tubeless tire without an inner liner using a rubber composition for a case cord covering rubber layer, which contains 1 to 10 parts by weight of a stickiness imparting agent based on 100 parts by weight of a rubber component consisting of a diene-based rubber and bromide of an isobutylene/p-methylstyrene copolymer and, as this stickiness imparting agent, a terpene resin, and a rosin derivative are exemplified. According to Patent Document 1, it is described that adhesiveness with other tire member is excellent by using such the rubber composition.

In addition, Japanese Patent Laying-Open No. 2004-2584 (Patent Document 2) discloses a rubber composition in which 40 to 500 parts by weight of a filler and 15 parts by weight or more of a resin are compounded based on 100 parts by weight of a rubber component and, as this resin, a terpene resin and a rosin resin are exemplified. According to Patent Document 2, it is described that both of wet gripping performance and abrasion resistance can be realized by adopting such the composition, and using this in a tread part.

Further, Japanese Patent Laying-Open No. 2006-63093 (Patent Document 3) discloses a rubber composition for a tread, containing 8 parts by weight or more of a resin, and a filler consisting of 80 % by weight or more of a white filler based on 100 parts by weight of a rubber component containing 80 % by weight or more of a natural rubber and/or an epoxidized natural rubber and, as this resin, a terpene resin, an aromatic modified terpene resin, and a rosin resin are exemplified. According to Patent Document 3, it is described that a content of a source other than a petroleum can be enhanced and, at the same time, the previous performance can be similarly preserved.

However, in the inventions disclosed in any one of Patent Documents 1 to 3, the aforementioned applications of various members and performance required for this are not considered at all, and it is hard to say that processibility is sufficient.

Patent Document 1: Japanese Patent Laying-Open No.11-11106
Patent Document 2: Japanese Patent Laying-Open No. 2004-2584

Patent Document 3: Japanese Patent Laying-Open No. 2006-63093

JP 2006-063,093 A discloses a rubber composition for a tire tread comprising 8 parts by weight or more of a resin and a filler, which consists of 80 % by weight or more of white fillers, based on 100 parts by weight of a rubber component containing 80 % by weight of a natural rubber and/or an epoxidized natural rubber. The rubber component may consist of a natural rubber and an epoxidized natural rubber.

JP 2006-249,188 A relates to a rubber composition for a tread of a tire, which contains a diene rubber component comprising 50 % by weight or more of a natural rubber, 20 to 150 parts by weight of a filler and 0.5 to 15 parts by weight of a phenol-modified terpene resin.

In JP 2007-099,932 A a rubber composition for a tire tread is described, which comprises a rubber component containing 50 to 100 % by weight of a natural rubber and 5 to 50 parts by weight of a phenol-modified rosin.

EP 1 288 022 A1 discloses a tire comprising a raw material derived from a non-petroleum resource in an amount of at least 75 % by weight based on the total weight of the tire, which may e.g. include natural rubber, an inorganic filler and vegetable oil.

EP 1 288 253 A1 describes a rubber composition comprising an inorganic filler, a silane coupling agent and a vegetable oil having an iodine number of at most 130.

In JP 2005-248,056 A a rubber composition for a tire tread comprising a natural rubber and a rosin ester is described.

EP 0 941 871 A2 relates to a rubber composition for a carcass ply, which comprises a natural rubber and a rosin acid.

## DISCLOSURE OF THE INVENTION

## PROBLEMS TO BE SOLVED BY THE INVENTION

The present invention was done in order to solve the aforementioned problems, and an object thereof is to provide a rubber composition in which both of maintenance of properties desired in various applications, and improvement in processibility can be realized while a use amount of a raw material derived from a petroleum source is reduced, and a pneumatic tire using the same.

## MEANS FOR SOLVING THE PROBLEMS

The rubber composition of the present invention includes a rubber composition comprising a rubber component, carbon black, silica and at least any one of a terpene based resin, and a rosin-based resin at 0.5 part by mass or more based on 100 parts by mass of the rubber component, wherein the rubber component contains a natural rubber component consisting of at least any one of a natural rubber and a modified natural rubber in a range of 20 to 100% by mass, and wherein the amount of carbon black is 5 parts by mass or less based on 100 parts by mass of the rubber component.

Here, it is preferable that the modified natural rubber is an epoxidized natural rubber.

It is preferable that the rubber component in the rubber composition of the present invention consists of the natural rubber component.

It is preferable that the rubber composition of the present invention is any one of the following:

- It is for a clinch rubber.
- It is for a base tread.
- It is for a tread, and further includes 45 parts by mass or more of silica, and 5 parts by mass or less of carbon black based on 100 parts by mass of the rubber component.
- It is for a carcass ply, and further includes 20 to 60 parts by mass of silica based on 100 parts by mass of the rubber component.
- It is for a bead apex, and further includes 60 parts by mass or more of silica, 5 parts by mass or less of carbon black, and 0.1 to 0.8 part by mass of a peptizer based on 100 parts by mass of the rubber component.

The present invention also provides a pneumatic tire which is any one of the following.

- It is provided with a clinch rubber consisting of the rubber component of the present invention for a clinch rubber.

- It is provided with a base tread part consisting of the rubber component of the present invention for a base tread.

- It is provided with a tread rubber consisting of the rubber component of the present invention for a tread.

- It is provided with the rubber composition of the present invention for a carcass ply, and a carcass ply constituted of a cord for a tire embedded in the rubber composition.

- It is provided with a bead apex consisting of the rubber composition of the present invention for a bead apex.

EFFECTS OF THE INVENTION

According to the present invention, a rubber composition which can realize both of maintenance of properties desired in various applications (rigidity, hardness, mechanical strength etc. when used in the clinch rubber, rolling resistance property, operation stability etc. when used in the base tread, gripping performance, durability including abrasion resistance, rolling resistance property, heat producing property etc. when used in the tread, and hardness, breakage property etc. when used in the bead apex), and improvement in processibility while a use amount of a raw material derived from a petroleum source is reduced, and a pneumatic tire using the same can be provided.

BRIEF DESCRIPTION OF THE DRAWINGS

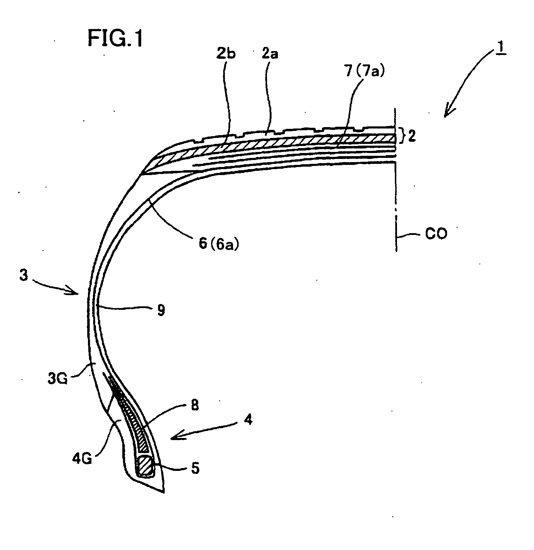

Fig. 1 is a schematic cross-sectional view showing one example of the pneumatic tire of the present invention.

DESCRIPTION OF THE REFERENCE SIGNS

In the figure, 1 is a tire, 2 is a tread part, 2a is a cap tread part, 2b is a base tread part, 3 is a side wall part, 4 is a bead part, 5 is a bead core, 6 is a carcass, 6a is a carcass ply, 7 is a belt layer, 8 is a bead apex rubber, 9 is an inner liner rubber, and 4G is a clinch rubber.

BEST MODES FOR CARRYING OUT THE INVENTION

The rubber composition of the present invention includes a rubber composition comprising a rubber component, carbon black, silica and at least any one of a terpene based resin, and a rosin-based resin at 0.5 part by mass or more based on 100 parts by mass of the rubber component, wherein the rubber component contains a natural rubber component consisting of at least any one of a natural rubber and a modified natural rubber in a range of 20 to 100% by mass, and wherein the amount of carbon black is 5 parts by mass or less based on 100 parts by mass of the rubber component. Such the rubber composition of the present invention can be suitably used for a clinch rubber or a base tread. In addition, the rubber composition of the present invention, when it further includes 45 parts by mass or more of silica, and 5 parts by mass or less of carbon black based on 100 parts by mass of the rubber component, can be suitably used for a tread. In addition, the rubber composition of the present invention, when it further includes 20 to 60 parts by mass of silica based on 100 parts by mass of the rubber component, can be suitably used for a carcass ply. Further, the rubber composition of the present invention, when it further includes 60 parts by mass or more of silica, 5 parts by mass or less of carbon black, and 0.1 to 0.8 part by mass of a peptizer, can be suitably used for a bead apex.

The rubber composition of the present invention contains a rubber composition comprising a rubber component, carbon black, silica and at least any one of a terpene based resin, and a rosin-based resin at 0.5 part by mass or more based on 100 parts by mass of the rubber component, wherein the amount of carbon black is 5 parts by mass or less based on 100 parts by mass of the rubber component. In addition, the rubber component used in the present invention contains a natural rubber component consisting at least any one of a natural rubber (NR) and a modified natural rubber (hereinafter, simply also referred to as "natural rubber component") in a range of 20 to 100 % by mass.

<Rubber component>

In the rubber composition of the present invention, the rubber component contains a natural rubber component consisting at least any one of a natural rubber and a modified natural rubber (ENR). That is, the natural rubber component in the present invention may consist only of a natural rubber, may consist only of a modified natural rubber, or may include both of them.

As the natural rubber used in the present invention, any natural rubber is included as far as it is known as a natural rubber, and a place of origin and the like are not limited. Such the natural rubber contains mainly cis 1,4 polyisoprene, and may contain trans 1,4 polyisoprene depending on the required property. Therefore, the natural rubber includes, in addition to a natural rubber containing mainly cis 1,4 polyisoprene, a natural rubber containing mainly trans 1,4 isoprene such as balata being one kind of Sapotaceae rubber plants produced in South America. The natural rubber component

4

in the present invention can contain one kind or two or more kinds of such the natural rubbers (i.e. one component or two or more components). As such the natural rubber, for example, a natural rubber of a grade such as RSS#3, and TSR can be suitably used.

The modified natural rubber used in the present invention refers to a rubber in which the aforementioned rubber is modified or purified, and examples include such as an epoxidized natural rubber (ENR), a deproteinized natural rubber (DPNR), and a hydrogenated natural rubber. The natural rubber component in the present invention may contains one kind or two or more kinds of such the modified natural rubbers. It is preferable that the natural rubber component in the present invention contains, as a modified natural rubber, an epoxidized natural rubber among them.

The epoxidized natural rubber is one kind of modified natural rubbers in which an unsaturated double bond of the natural rubber is epoxidized, and a molecular cohesive force is enhanced by an epoxy group which is a polar group. For this reason, a glass transition temperature (Tg) is higher than that of the natural rubber, and a mechanical strength, abrasion resistance, and air permeability resistance are excellent. As such the epoxidized natural rubber, a commercially available epoxidized natural rubber such as ENR25 (manufactured by Kumpulan Guthrie Berhad) (epoxidization rate: 25%), and ENR50 (manufactured by Kumpulan Guthrie Berhad) (epoxidization rate: 50%) may be used, and an epoxidized natural rubber may be used. A method of epoxidizing a natural rubber is not particularly limited, and includes such as a chlorohydrin method, a direct oxidation method, a hydrogen peroxide method, an alkylhydroperoxide method, and a peracid method. Examples of the peracid method include a method of reacting organic peracid such as peracetic acid and performic acid as an epoxidizing agent with an emulsion of the natural rubber.

It is preferable that an epoxidization rate of the epoxidized natural rubber (ENR) is 5 mol % or more. Here, the epoxidization rate means a ratio of the number of epoxidized double bonds among the total number of double bonds in the natural rubber before epoxidization ((the number of epoxidized double bonds)/(the number of double bonds before epoxidization)), and is obtained by, for example, titration analysis, or nuclear magnetic resonance (NMR) analysis. When the epoxidization rate of the epoxidized natural rubber (ENR) is less than 5 mol%, since a glass transition temperature of the epoxidized natural rubber (ENR) is low, a rubber hardness of the rubber composition is reduced. For this reason, there is a tendency that when a rubber composition in which the epoxidization rate of the epoxidized natural rubber is less than 5 mol% like this is used for a clinch rubber or a tread, durability and fatigue resistance of a pneumatic tire using the same are reduced, when the composition is used for a base tread, operation stability of a pneumatic tire using the same is reduced and, when the composition is used for a bead apex, it is hard to obtain a high harness, high durability, high fatigue resistance and high rolling resistance of a pneumatic tire using the same. In addition, when the rubber composition of the present invention is used in the clinch rubber, the base tread, or the tread, the epoxidization rate of the epoxidized natural rubber is more preferably 10 mol% or more and, when the rubber composition of the present invention is used in the bead apex, the epoxidization rate of the epoxidized natural rubber is more preferably 25 mol% or more.

In addition, when the rubber composition of the present invention is used in the clinch rubber, the base tread, or the tread, the epoxidization rate of the epoxidized natural rubber is preferably 65 mol% or less, more preferably 60 mol% or less. In this case, when the epoxidization rate of the epoxidized natural rubber exceeds 65 mole%, there is a tendency that a mechanical strength is reduced due to a too hard rubber composition. In addition, when the rubber composiiton of the present invention is used in the bead apex, the epoxidizaiton rate of the epoxidized natural rubber is preferably 50 mol% or less, more preferably 30 mole% or less. In this case, when the epoxidization rate of the epoxidized natural rubber (ENR) exceeds 50 mol%, there is a tendency that a hardness is excessively increased, and bending fatigue resistance is reduced in a pneumatic tire provided with the bead apex using the rubber composition.

More typically, examples of the epoxidized natural rubber (ENR) include an epoxidized natural rubber having the epoxidization rate of 25 mol%, and an epoxidized natural rubber having the epoxidization rate of 50 mol%.

In the present invention, a content of the natural rubber component in the rubber component is 20% by mass or more. When the content of the natural rubber component in the rubber component is less than 20% by mass, the effect of reducing a use amount of a raw material derived from a petroleum source is not sufficiently obtained. The content of the natural rubber component in the rubber component is preferably 30% by mass or more, more preferably 40% by mass or more. In addition, particularly, when the rubber composition of the present invention is used in a.carcass ply, the content of the natural rubber component in the rubber component is preferably 50% by mass or more, more preferably 70% by mass or more, particularly preferably 90% by mass or more. From the viewpoint that the effect of reducing a use amount of a raw material derived from a petroleum source is better, although it is preferable that the content of the natural rubber component in the rubber component is 100% by mass (that is, the rubber component consists of the natural rubber component), for example, the content of the natural rubber component in the rubber component may be 50% by mass or less, further 30% by mass or less, and a rubber other than the natural rubber component as a remaining part in the rubber component may be compounded.

In addition, when the rubber composition of the present invention is used in the carcass ply, it is preferable that the aforementioned rubber component contains a natural rubber component consisting of 30 to 70% by mass of a natural rubber (NR), and 30 to 70% by mass of a modified natural rubber.

In addition, the rubber component may contain a rubber derived from a petroleum source in such a range that the effect of the present invention is not deteriorated. Examples of the rubber derived from a petroleum source include such as a styrene butadiene rubber (SBR), a butadiene rubber (BR), a styrene isoprene copolymer rubber, an isoprene rubber (IR), a butyl rubber (IIR), a chloroprene rubber (CR), an acrylonitrile butadiene rubber (NBR), a halogenated butyl rubber (X-IIR), and a halide of a copolymer of isoprene and p-methylstyrene. Among them, SBR, BR, and IR are preferable in that, in the case where a hardness of the rubber composition of the present invention can be higher, and the rubber composition of the present invention is used in the clinch rubber, particularly better durability and fatigue resistance can be imparted to a pneumatic tire using this, in the case where the rubber composition of the present invention is used in the base tread, durability can be imparted to a pneumatic tire using this and, in the case where the rubber composition in the present invention is used in the tread, a mechanical strength can be imparted to a pneumatic tire using this. Further, in the case where the rubber composition of the present invention is used in the bead apex, a high hardness, high durability, high fatigue resistance, and high rolling resistance can be imparted to a pneumatic tire using this.

<Terpene-based resin and rosin-based resin>

The rubber composition of the present invention contains at least any one of a terpene-based resin and a rosin-based resin as a resin using a natural material. That is, the rubber composition of the present invention may contain only a terpene-based resin, may contain only a rosin-based resin, or may contain both of them. Alternatively, the composition may contain a plurality of kinds of terpene-based resins, and rosin-based resins.

The "terpene-based resin" as used herein refers to a resin obtained by polymerizing, as a main monomer, a terpene compound contained in a plant essential oil obtained from generally a leaf, a tree, a root or the like of a plant. The terpene compound is generally a polymer of isoprene ($C_5H_8$), and is a compound in which terpene classified into such as monoterpene ($C_{10}H_{16}$), sesquiterpene ($C_{15}H_{24}$), and diterpene ($C_{20}H_{32}$) is a fundamental skeleton. Examples include such as $\alpha$-pinene, $\beta$-pinene, dipentene, limonene, myrcene, allo-ocimene, ocimene, a-phellandrene, $\alpha$-terpinene, $\gamma$-terpinene, terpinolene, 1,8-cineole, 1,4-cineole, $\alpha$-terpineol, $\beta$-terpineol, $\gamma$-terpineol, camphene, tricyclenme, sabinene, paramenthadienes, and carenes.

The terpene-based resin in the present invention also includes, in addition to a terpene resin such as an $\alpha$-pinene resin, a $\beta$-pinene resin, a limonene resin, a dipentene resin, and a $\beta$-pinene/limonene resin from a raw material of the aforementioned terpene compound, an aromatic compound-modified terpene resin from a raw material of the terpene compound and an aromatic compound, a terpenephenol resin from a raw material of the terpene compound and a phenol-based compound, and a hydrogenated terpene resin in which the terpene resin was hydrogenation-treatedsubjected to hydrotreatment. Here, examples of the aromatic compound which isbeing a raw material of the aromatic terpene resin in the present invention include such as styrene, $\alpha$-methylstyrene, vinyltoluene, and divinyltoluene, and examples of the phenol-based compound which isbeing a raw material of the terpenephenol resin include such as phenol, bisphenol A, cresol, and xylenol.

As such the terpene-based resin, a commercially available product such as PX300N (manufactured by YASUHARA CHEMICAL CO., LTD.), and PX1000N (manufactured by YASUHARA CHEMICAL CO., LTD.) can be suitably used.

When the rubber composition of the present invention contains the terpene-based resin, the terpene-based resin has a softening point of preferably 150°C or lower, more preferably 120°C or lower. When the softening point exceeds 150°C, there is a tendency that the resin is dispersed with difficulty, and stickiness is low.

In addition, the "rosin-based resin" as used herein includes a hydrogenated rosin resin, a modified rosin resin such as a maleic acid-modified rosin resin, and a rosin-modified phenol resin, and a disproportionated rosin resin obtained by disproportionating rosin ester such as rosin glycerin ester, or a rosin resin, in addition to a naturally occurring rosin resin (polymerized rosin) such as gum rosin, wood rosin, and tall oil rosin containing, as a main component, resin acid such as abietic acid, neoabietic acid, parastrinic acid, levopimaric acid, pimaric acid, isopimaric acid, and dehydroabietic acid, obtained by processing rosin.

As such the rosin-based resin, a commercially available product such as tall oil rosin TP90B (manufactured by Harima Chemicals, Inc.) can be suitably used.

When the rubber composition of the present invention contains the rosin-based resin, the resin-based resin has a softening point of preferably 150°C or lower, more preferably 120°C or lower. When the softening point exceeds 150°C, there is a tendency that the resin is dispersed with difficulty, and stickiness is low.

The rubber composition of the present invention contains at least any one selected from the terpene-based resin and the rosin-based resin at 0.5 part by mass or more based on 100 parts by mass of the rubber component. Here, when the composition contains both of the terpene-based resin and the rosin-based resin, a total amount of them is 0.5 part by mass or more based on 100 parts by mass of the rubber component. When the content of at least any one selected from the terpene-based resin and the rosin-based resin is less than 0.5 part by mass based on 100 parts by mass of the rubber component, there is a disadvantage that stickiness necessary for processing is deficient.

In addition, in the rubber composition of the present invention, when the rubber composition is used in the clinch rubber or the base tread, the aforementioned content of at least any one selected from the terpene-based resin and the rosin-based resin is preferably 20 parts by weight or less, more preferably 15 parts by weight or less based on 100 parts by mass of the rubber component. When the rubber composition is used in the clinch rubber or the base tread, in the case where the content of at least any one selected from the terpene-based resin and the rosin-based resin exceeds 20 parts by mass based on 100 parts by mass of the rubber component, there is a tendency that a hardness and a mechanical strength required for a clinch or a base tread are deficient.

In addition, in the rubber composition of the present invention, when the rubber composition is used in the tread, the aforementioned content of at least any one selected from the terpene-based resin and the rosin-based resin is preferably 100 parts by mass or less, more preferably 70 parts by mass or less based on 100 parts by mass of the rubber component. When the rubber composition is used in the tread, in the case where the content of at least any one selected from the terpene-based resin and the rosin-based resin exceeds 100 parts by mass based on 100 parts by mass of the rubber component, there is a tendency that stickiness becomes excessively high, and processibility is conversely deteriorated.

In addition, in the rubber composition of the present invention, when the rubber composition is used in the carcass ply, the aforementioned content of at least any one of the terpene-based resin and the rosin-based resin (particularly terpene-based resin) is preferably 15 parts by mass or less based on 100 parts by mass of the rubber component. When the rubber composition is used in the carcass ply, in the case where the content of at least any one of the terpene-based resin and the rosin-based resin exceeds 15 parts by mass based on 100 parts by mass of the rubber component, tensile property is inferior. When the rubber composition is used in the carcass ply, at least any one of the terpene-based resin and the rosin-based resin is contained preferably at 2 to 10 parts by mass, more preferably 3 to 5 parts by mass based on 100 parts by mass of the rubber component.

Further, in the rubber composition of the present invention, when the rubber composition is used in the bead apex, the aforementioned content of at least any one selected from the terpene-based resin and the rosin-based resin is preferably 15 parts by mass or less, more preferably 10 parts by mass or less based on 100 parts by mass of the rubber component. When the rubber composition is used in a bead apex, in the case where the content of at least any one selected from the terpene-based resin and the rosin-based resin exceeds 15 parts by mass based on 100 parts by mass of the rubber component, there is a tendency that a hardness is reduced. When the rubber composition is used in the bead apex, from a viewpoint that a tacking force is maintained optimally, the content of at least any one selected from the terpene-based resin and the rosin-based resin is preferably 0.5 part by mass or more, more preferably 2 parts by mass or more based on 100 parts by mass of the rubber component.

<Silica>

Silica is further contained in the rubber composition of the present invention. Silica functions as a reinforcing filler and, by compounding silica, a tensile strength can be improved. In addition, since silica is derived from a source other than a petroleum, a use amount of a raw material derived from a petroleum source in the rubber composition can be reduced as compared with, for example, the case where a reinforcing agent derived from a petroleum source such as carbon black is compounded as a main reinforcing agent.

It is preferable that silica having a BET specific surface area of $50m^2/g$ or more is used, and it is more preferable that silica having a BET specific surface area of $80m^2/g$ or more is used. When silica having a BET specific surface area of less than $50m^2/g$ is used, there is a tendency that a sufficient hardness is not obtained. In addition, a BET specific area of silica is preferably $500m^2/g$ or less, more preferably $300m^2/g$ or less. When silica having a BET specific surface area exceeding $500m^2/g$ is used, there is a tendency that processibility of the rubber is reduced. The aforementioned BET specific surface area of silica can be measured by, for example, the method according to ASTM-D-4820-93.

The content of silica is not particularly limited, but when the rubber composition of the present invention is used in the clinch rubber or the base tread, the content is 35 parts by mass or more, preferably 45 parts by mass or more based on 100 parts by mass of the rubber component. When a content of silica is less than 35 parts by mass based on 100 parts by mass of the aforementioned rubber component, there is a tendency that a sufficient strength as a clinch rubber or a base tread is not obtained, and there is a tendency that a particularly sufficient tensile strength is not obtained. In addition, when the rubber composition of the present invention is used in the clinch rubber or the base tread, the content of silica is preferably 150 parts by mass or less, more preferably 130 parts by mass or less based on 100 parts by mass of the rubber component. When the rubber composition of the present invention is used in the clinch rubber or the base tread, in the case where the content of silica exceeds 150 parts by mass based on 100 parts by mass of the rubber component, there is a tendency that processibility of the rubber is reduced and, at the same time, heat generation of the rubber at running becomes high.

In addition, when the rubber composition of the present invention is used in the tread, a content of silica is 45 parts by mass or more, preferably 60 parts by mass or more based on 100 parts by mass of the aforementioned rubber component. When the content of silica is less than 45 parts by mass based on 100 parts by mass of the rubber component, there is a tendency that a sufficient strength as a tread rubber is not obtained, and a particularly sufficient tensile strength is not obtained. In addition, when the rubber composition of the present invention is used in the tread, the content of silica is preferably 150 parts by mass or less, more preferably 130 parts by mass or less based on 100 parts by mass of the rubber component. When the rubber composition of the present invention is used in the tread, in the case where the content of silica exceeds 150 parts by mass based on 100 parts by mass of the rubber component, there is a tendency that processability of the rubber is reduced and, at the same time, heat generation at running becomes high in a tread rubber using the rubber composition.

In addition, when the rubber composition of the present invention is used in the bead apex, the content of silica is preferably 60 parts by mass or more based on 100 parts by mass of the aforementioned rubber component. When the rubber composition of the present invention is used in the bead apex, in the case where the content of silica is less than 60 parts by mass based on 100 parts by mass of the rubber component, there is a tendency that a sufficient hardness is not obtained in the resulting bead apex, and particularly there is a possibility that a sufficient tensile strength is not obtained. In addition, when the rubber composition of the present invention is used in the bead apex, the content of silica is preferably 120 parts by mass or less, more preferably 100 parts by mass or less based on 100 parts by mass of the aforementioned rubber component. When the content of silica exceeds 120 parts by mass based on 100 parts by mass of the rubber component, there is a tendency that a breakage strength is reduced.

Silica may be silica prepared by a wet method, or silica prepared by a dry method. In addition, examples of a preferable commercially available product include such as Ultrasil VN2 (manufactured by Evonik Degussa Japan. Co., Ltd.) (BET specific surface area: 125m$^2$/g), and Ultrasil VN3 (manufactured by Evonik Degussa Japan. Co., Ltd.) (BET specific surface area: 175m$^2$/g).

<Silane coupling agent>

It is preferable that a silane coupling agent together with silica is compounded. As the silane coupling agent, the previously known silane coupling agent can be used, and examples include sulfide-based silane coupling agents such as bis(3-triethoxysilylpropyl) tetrasulfide, bis(2-triethoxysilylethyl) tetrasulfide, bis(4-triethoxysilylbutyl) tetrasulfide, bis(3-trimethoxysilylpropyl) tetrasulfide, bis(2-trimethoxysilylethyl) tetrasulfide, bis(4-trimethoxysilylbutyl) tetrasulfide, bis(3-triethoxysilylpropyl) trisulfide, bis(2-triethoxysilylethyl) trisulfide, bis(4-triethoxysilylbutyl) trisulfide, bis(3-trimethoxysilylpropyl) trisulfide, bis(2-trimethoxysilylethyl) trisulfide, bis(4-trimethoxysilylbutyl) trisulfide, bis(3-triethoxysilylpropyl) disulfide, bis(2-triethoxysilylethyl) disulfide, bis(4-triethoxysilylbutyl) disulfide, bis(3-trimethoxysilylpropyl) disulfide, bis(2-trimethoxysilylethyl) disulfide, bis(4-trimethoxysilylbutyl) disulfide, 3-trimethoxysilylpropyl-N, N-dimethylthiocarbamoyl tetrasulfide, 3-triethoxysilylpropyl-N, N-dimethylthiocarbamoyl tetrasulfide, 2-triethoxysilylethyl-N, N-dimethylthiocarbamoyl tetrasulfide, 2-trimethoxysilylethyl-N,N-dimethylthiocarbamoyl tetrasulfide, 3-trimethoxysilylpropylbenzothiazolyl tetrasulfide, 3-triethoxysilylpropylbenzothiazole tetrasulfide, 3-trimethoxysilylpropyl methacrylate monosulfide, 3-trimethoxysilylpropyl methacrylate monosulfide; mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; vinyl-based silane coupling agents such as vinyltriethoxysilane, and vinyltrimethoxysilane; amino-based silane coupling agents such as 3-aminopropyltriethoxysilane, 3-aminopropyltrimethoxysilane, 3-(2-aminoethyl)aminopropyltriethoxysilane, and 3-(2-aminoethyl)aminopropyltrimethoxysilane; glycidoxy-based silane coupling agents such as γ-glycidoxypropyltriethoxysilane, γ-glycidoxypropyltrimethoxysilane, γ-glycidoxypropylmethyldiethoxysilane, and γ-glycidoxypropylmethyldimethoxysilane; nitro-based silane coupling agents such as 3-nitropropyltrimethoxysilane, and 3-nitropropyltriethoxysilane; chloro-based silane coupling agents such as 3-chloropropyltrimethoxysilane, 3-chloropropyltriethoxysilane, 2-chloroethyltrimethoxysilane, and 2-chloroethyltriethoxysilane. These silane coupling agents may be used alone, or may be used by combining two or more kinds.

Among them, Si69 (manufactured by Evonik Degussa Japan. Co., Ltd.) (bis(3-triethoxysilylpropyl) tetrasulfide), and Si266 (manufactured by Evonik Degussa Japan. Co., Ltd.) (bis(3-triethoxysilylpropyl) disulfide) are preferably used based on the reason of better processibility.

When the silane coupling agent is further contained, a content thereof is not particularly limited, but is preferably 4 parts by mass or more, more preferably 6 parts by mass or more based on 100 parts by mass of silica. When the content of the silane coupling agent is less than 4 parts by mass based on 100 parts by mass, there is a tendency that a rubber strength is reduced. In addition, the content of the silane coupling agent is preferably 20 parts by mass, more preferably 15 parts by mass based on 100 parts by mass of silica. When the content of the silane coupling agent exceeds 20 parts by mass based on 100 parts by mass of silica, the effect of improving kneading and extrusion processibility of the rubber is small and, on the other hand, the cost is increased, being not economical, and there is a tendency that a rubber strength is reduced.

<Carbon black>

The rubber composition of the present invention further contains carbon black as a reinforcing agent in such a range that the effect of the present invention is not deteriorated. By compounding of carbon black, a better mechanical strength is imparted, but since carbon black is generally derived from a petroleum source, in order to reduce a use amount of a raw material derived from a petroleum source, the compounding amount of carbon black is 5 parts by mass or less, further 3 parts by mass or less, further 2 parts by mass or less based on 100 parts by mass of the rubber component. When the rubber composition of the present invention is used in the tread, usually, carbon black is compounded as a reinforcing agent.

Examples of a preferable commercially available product of carbon black include Show Black N220 (manufactured by Cabot Japan K.K.).

<Peptizing Agent>

In addition, when the rubber composition of the present invention is used in the bead apex, it is preferable that a peptizing agent is further contained. The peptizing agent is also called peptizer or mastication accelerator, and is added in order to chemically cut a rubber molecule of a raw material unvulcanized rubber to accelerate plasticization, and promote reduction in a viscosity of the rubber to shorten a mastication working time. As the peptizing agent, the previously known appropriate peptizing agent such as an aromatic mercaptan compound, a disulfide-based compound and a zinc salt thereof, organic peroxide, a nitro compound, and a nitroso compound can be used. In the rubber composition for the bead apex of the present invention, the peptizing agent is compounded at 0.1 to 0.8 part by mass based on 100 parts by mass of the aforementioned rubber component.

<Other compounding ingredient>

In the rubber composition of the present invention, in addition to the aforementioned components, other compounding ingredient having been previously used in the rubber industry, for example, a vulcanizing agent, stearic acid, a vulcanization accelerator, a vulcanization accelerator auxiliary agent, an oil, a hardened resin, a wax, and an aging preventing agent may be compounded.

As the vulcanizing agent, organic peroxide or a sulfur-based vulcanizing agent can be used and, as the organic peroxide, for example, benzoyl peroxide, dicumyl peroxide, di-t-butyl peroxide, t-butylcumyl peroxide, methyl ethyl ketone peroxide, cumene hydroperoxide, 2,5-dimethyl-2,5-di(t-butylperoxy)hexane, 2,5-dimethyl-2,5-di(benzoylperoxy)hexane, 2,5-dimethyl-2,5-di(t-butylperoxy)hexyne-3 or 1,3-bis(t-butylperoxypropyl)benzene, di-t-butylperoxy-diisopropylbenzene, t-butylperoxybenzene, 2,4-dichlorobenzoyl peroxide, 1,1-di-t-butylperoxy-3,3,5-trimethylsiloxiane, and n-butyl-4,4-di-t-butylperoxyvalerate can be used. Among them, dicumyl peroxide, t-butylperoxybenzene and bi-t-butylperoxy-diisopropylbenzene are preferable. In addition, as the sulfur-based vulcanizing agent, for example, sulfur, and morpholine disulfide can be used. Among them, sulfur is preferable. These vulcanizing agents may be used alone, or may be used by combining two or more kinds.

As the vulcanizing accelerator, an accelerator containing at least one of sulfenamide-based, thiazole-based, thiuram-based, thiourea-based, guanidine-based, dithiocarbamic acid-based, aldehyde-amine-based or aldehyde-ammonia-based, imidazoline-based, and xanthate-based vulcanization accelerators can be used. As the sulfenamide-based vulcanization accelerators, sulfenamide-based compounds such as CBS (N-cyclohexyl-2-benzothiazylsulfenamide), TBBS (N-tert-butyl-2-benzothiazylsulfenamide), N, N-dicyclohexyl-2-benzothiazylsulfenamide, N-oxydiethylene-2-benzothiazylsulfenamide, and N, N-diisopropyl-2-benzothiazolesulfenamide can be used. As the thiazole-based vulcanization accelerator, thiazole-based compounds such as MBT (2-mercaptobenzothiazole), MBTS (dibenzothiazyl disulfide), a sodium salt, a zinc salt or a copper salt of 2-mercaptobenzothiazole, a cyclohexylamine salt, 2-(2,4-dinitrophenyl)mercaptobenzothiazole, and 2-(2,6-diethyl-4-morpholinothio)benzothiazole can be used. As the thiuram-based vulcanization accelerator, thiuram-based compounds such as TMTD (tetramethylthiuram disulfide), tetraethylthiuram disulfide, tetramethylthiuram monosulfide, dipentamethylenethiuram disulfide, dipentamethylenethiuram monosulfide, dipentamethylenethiuram tetrasulfide, dipentamethylenethiuram hexasulfide, tetrabutylthiuram disulfide, and pentamethylenethiuram tetrasulfide can be used. As the thiourea-based vulcanization accelerator, thiourea compounds such as thiacarbamide, diethylthiourea, dibutylthiourea, trimethylthiourea, and diorthotolylthiourea can be used. As the guanidine-based vulcanization accelerator, guanidine-based compounds such as diphenylguanidine, diorthotolylguanidine, triphenylguanidine, orthotolylbiguanide, and diphenylguanidine phthalate can be used. As the dithiocarbamic acid-based vulcanization accelerator, dithiocarbamic acid-based compounds such as zinc ethylphenyldithiocarbamate, zinc butylphenyldithiocarbamate, sodium dimethyldithiocarbamate, zinc dimethyldithiocarbamate, zinc diethyldithiocarbamate, zinc dibutyldithiocarbamate, zinc diamyldithiocarbamate, zinc dipropyldithiocarbamate, a complex salt of zinc pentamethylenedithiocarbamate and piperidine, zinc hexadecyl (or octadecyl)isopropyldithiocarbamate, zinc dibenzyldithiocarbamate, sodium diethyldithiocarbamate, pentamethylenedithiocarbamic acid piperidine, selenium dimethyldithiocarbamate, tellurium diethyldithiocarbamate, and cadmium diamyldithiocarbamate can be used. As the aldehyde-amine-based or aldehyde-ammonia-based vulcanization accelerator, aldehyde-amine-based or aldehyde-ammonia-based compounds such as an acetoaldehyde-aniline reaction product, a butylaldehyde-aniline condensate, hexamethylenetetramine, and an acetoaldehyde-ammonia reaction product can be used. As the imidazoline-based vulcanization accelerator, imidazoline-based compounds such as 2-mercaptoimidazoline can be used. As the xanthate-based vulcanization accelerator, xanthate-based compound such as zinc dibutylxanthogenate can be used. These vulcanization accelerators may be used alone, or may be used by combining two or more kinds.

As the vulcanization accelerator auxiliary agent, for example, zinc oxide, and stearic acid can be used.

As the aging preventing agent, amine-based agent, phenol-based agent, imidazole-based agent, and a carbamic acid metal salt can be used by appropriate selection.

The rubber composition of the present invention may contain a stearic acid metal salt. Examples of the stearic acid metal salt include such as magnesium stearate, magnesium 12-hydroxystearate, calcium stearate, calcium 12-hydroxystearate, barium stearate, barium 12-hydroxystearate, zinc stearate, and zinc 12-hydroxystearate. Among the stearic acid metal salt, from a viewpoint of the effect of improving heat resistance, and compatibility with the epoxidized natural rubber, a stearic acid alkaline earth metal salt is preferable, and calcium stearate, calcium 12-hydroxystearate, barium stearate, and barium 12-hydroxystearate are more preferable.

Examples of the oil include such as a process oil, a vegetable oil, and a mixture thereof Examples of the process oil include such as a paraffin-based process oil, a naphthene-based process oil, and an aromatic-based process oil. Examples of the vegetable oil include such as a castor oil, a cotton seed oil, a linseed oil, a rapeseed oil, a soybean oil, a palm oil, a coconut oil, a peanut oil, a pine oil, a pine tar, a tall oil, a corn oil, a rice oil, a safflower oil, a sesame oil, an olive oil, a sunflower oil, a palm kernel oil, a camellia oil, a jojoba oil, a macadamia nut oil, a safflower oil, and a paulownia oil.

<Physical property>

The rubber composition of the present invention has enabled to realize both of maintenance of properties desired in various applications (rigidity, hardness, and mechanical strength etc. when used in the clinch rubber, rolling resistance property, and operation stability etc. when used in the base tread, gripping performance, durability including abrasion resistance, rolling resistance property, and heat generation property etc. when used in the tread, and a hardness, breakage property etc. when used in the bead apex), and improvement in processibility while a use amount of a raw material derived from a petroleum source is reduced. Here, improved "processibility" refers to that a stickiness index calculated by the following calculation equation from a tacking force of an unvulcanized rubber composition measured (details such as measurement condition will be described later) using a PICMATAC tester (manufactured by Toyo Seiki Seisaku-sho, Ltd.) is 105 or more (further preferably 110 or more), when the rubber composition of the present invention is used in the carcass ply or the bead apex.

- Stickiness index

=(tacking force of rubber composition of the present invention / tacking force of standard compounding rubber composition) × 100

In addition, when the rubber composition of the present invention is used in the clinch rubber, the base tread or the tread, improved "processibility" refers to that the aforementioned stickiness index is 105 or more (further preferably 110 or more) and, additionally, a Mooney viscosity index calculated by the following calculation equation from a Mooney viscosity of an unvulcanized rubber composition measured (details such as measurement condition will be described later) using a Mooney viscometer (manufactured by Shimadzu Corporation) according to the provision of JIS K6300 is 105 or more (further 110 or more).

-Mooney viscosity index

=(Mooney viscosity of standard compounding rubber composition)/(Mooney viscosity

of rubber composition of the present invention) × 100

The standard compounding rubber composition in each of the calculating equation refers to a rubber composition which is compounded into the same composition as the rubber composition of the present invention except that at least any one of the terpene-based resin and the rosin-based resin is not contained.

<Pneumatic tire>

The present invention also provides a pneumatic tire using the aforementioned rubber composition of the present invention. Here, Fig. 1 is a schematic cross-sectional view showing one example of the pneumatic tire of the present invention. The pneumatic tire 1 includes a tread part 2 provided with a cap tread part 2a and a base tread part 2b, a pair of side wall parts 3 extending inwardly in a tire radial direction from both ends of tread part 2, and a bead part 4 situated at an inner end of each side wall part 3. In addition, a carcass 6 is bridged between bead parts 4, 4 and, at the same time, a belt layer 7 having the hoop effect to reinforce tread part 2 is disposed on an outer side of this carcass 6 and in tread part 2.

Above mentioned carcass 6 is formed of one or more carcass plies 6a in which a carcass cord is arranging at an angle of, for example, 70 to 90° relative to a tire equator CO, and this carcass ply 6a is locked by turning up from an inner side to an outer side in a tire axial direction around a bead core 5 of bead part 4 via from the aforementioned tread part 2 to side wall part 3.

Above mentioned belt layer 7 is formed of two or more belt plies 7a in which a belt cord is arranged at an angle of, for example, 40° or less relative to a tire equator CO, and each belt cord is piled up in different directions so as to cross between plies. If necessary, a band layer (not shown) for preventing lifting of both ends of belt layer 7 may be provided at least outside belt layer 7 and, thereupon, the band layer is formed of a continuous ply in which an organic fiber cord having a low modulus is spirally wound approximately parallel with the tire equator CO.

In addition, in bead part 4, a bead apex rubber 8 extending outwardly in a radial direction from bead core 5 is disposed and, at the same time, on an inner side of carcass 6, an inner liner rubber 9 forming a tire inner cavity surface is provided adjacent, and an outer side of carcass 6 is protected with a clinch rubber 4G and a side wall rubber 3G. The rubber composition of the present invention can be used in at least any one selected from clinch rubber 4G, base tread part 2b, cap tread part 2a, carcass ply 6a and bead apex rubber 8.

Fig. 1 exemplifies the pneumatic tire for a passenger automobile, but the present invention is not limited to this, and provides a pneumatic tire being used in application of various vehicles such as a passenger automobile, a truck, a bus, and a heavy vehicle.

The pneumatic tire of the present invention is produced by the previously known method using the rubber composition of the present invention. That is, a rubber composition containing the aforementioned essential components, and other compounding ingredients which are compounded optionally is kneaded, extrusion-processed the resin composition in conformity with a shape of at least any one selected from a clinch, a base tread part, a tread rubber, a carcass ply and a bead apex of a tire at at a stage of unvulcanization, and molding together with other members of the tire on a tire molding machine by a conventional method, thereby, an unvulcanized tire is formed. By heating and pressing this unvulcanized tire in a vulcanizing machine, the tire of the present invention can be obtained.

In addition, when the rubber composition of the present invention is used in the carcass ply, after the composition in the aforementioned unvulcanized state is extrusion-processed into a shape of the carcass ply, this is applied on an upper surface and a lower surface of a cord for a tire to be embedded to make the carcass ply, and together with other members of the tire, the carcass ply is molded on a tire molding machine by a conventional method. In this case, the carcass ply is not particularly limited as far as it complies the aforementioned rubber composition for the carcass ply of the present invention, and an appropriate material which has previously been known as a cord for a tire (e.g. rayon fiber, purified cellulose fiber etc.) can be also used.

Since the pneumatic tire of the present invention uses a rubber composition in which a content ratio of components derived from a petroleum source is further reduced, source saving and environmental protection are sufficiently considered and, at the same time, both of maintenance of better physical property desired depending on each application, and improvement in processability are realized, it is an "ecological tire" which is friendly to the earth environment and, at the same time, has improved processability, and has desired property such as better durability and operation stability in a clinch rubber, a base tread or a bead apex, desired property such as gripping performance, durability including abrasion resistance, rolling resistance property, and heat generation property in a tread, and desired property as a carcass ply.

The present invention will be described in more detail below by way of Examples and Comparative Examples, but the present invention is not limited to these Examples.

<Examples 1 to 3, Comparative Examples 1 and 2:rubber composition for clinch rubber>

According to compounding and formulation shown in Table 1, and using a 1.7 L Banbury mixer manufactured by KOBE STEEL, LTD., compounding components except for sulfur and a vulcanization accelerator were charged to a charging rate of 58%, and kneaded at a rotation number of 80rpm for 3 minutes until a temperature reached 140°C.

Then, after sulfur and a vulcanization accelerator were added to the resulting kneaded product at compounding amounts shown in Table 1, the mixture was kneaded at 80°C for 5 minutes using an open roll to obtain unvulcanized rubber compositions related to Example 1 and Comparative Examples 1 and 2.

Table 1

| | | Example 1 | Example 2 | Example 3 | Comparative Example 1 | Comparative Example 2 |
|---|---|---|---|---|---|---|
| Compounding amount (part by mass) | Natural rubber | 100 | 100 | 80 | 100 | 100 |
| | Epoxidized natural rubber | - | - | 20 | - | - |
| | Carbon black | 5 | 5 | 5 | 5 | 5 |
| | Silica | 60 | 60 | 60 | 60 | 60 |
| | Silane Coupling agent | 4.8 | 4.8 | 4.8 | 4.8 | 4.8 |
| | Oil | 1.2 | 1.2 | 1.2 | 1.2 | 1.2 |
| | Resin (1) | - | - | - | 1 | 3 |
| | Resin (2) | 1 | 3 | 3 | - | - |
| | Wax | 1.5 | 1.5 | 1.5 | 1.5 | 1.5 |
| | Age resister | 2.4 | 2.4 | 2.4 | 2.4 | 2.4 |
| | Stearic acid | 2 | 2 | 2 | 2 | 2 |
| | Zinc oxide | 3 | 3 | 3 | 3 | 3 |
| | Sulfur | 2.0 | 2.0 | 2.0 | 2.0 | 2.0 |
| | Vulcanization Accelerator | 2.0 | 2.0 | 2.0 | 2.0 | 2.0 |
| Rubber processibility | Stickiness | 110 | 115 | 110 | 100 | 110 |
| | Reduction in viscosity | 110 | 115 | 110 | 100 | 100 |

Details of various compounding components used in Examples 1 to 3, and Comparative Examples 1 and 2 are as follows.

(1) Natural rubber (NR): SIR (manufactured in Indonesia)
(2) Epoxidized natural rubber (ENR): ENR25 (manufactured by Malaysian Rubber Board) (epoxidization rate: 25%)
(3) Carbon black: Show Black N220 (manufactured by Cabot Japan K.K.)
(4) Silica: Ultrasil VN3 (manufactured by Evonik Degussa Japan Co., Ltd.) (BET specific surface area: 175 $m^2$/g)
(5) Silane coupling agent: Si266 (manufactured by Evonik Degussa Japan Co., Ltd.)
(6) Oil: NH60 (manufactured by Idemitsu Kosan Co., Ltd)
(7) Resin (1): Marcalets T100AS (manufactured by Maruzen Petrochemical Co., Ltd)
(8) Resin (2): Terpene resin PX300N (manufactured by YASUHARA CHEMICAL CO., LTD.)
(9) Wax: Sunnoc Wax (manufactured by OUCHI SHINKO CHEMICAL INDUSTRIAL CO., LTD.)
(10) Age resister: Nocrac 6C (manufactured by OUCHI SHINKO CHEMICAL INDUSTRIAL CO., LTD.) (N-(1,3-dimethylbutyl)-N'-phenyl-p-phenylenediamine))
(11) Stearic acid: Paulownia (manufactured by Nippon Oil & Fat Co., Ltd.)
(12) Zinc oxide: Zinc white (manufactured by MITSUI MINING & SMELTING CO., LTD.)
(13) Sulfur: powdery sulfur (manufactured by Tsurumi Chemical Co., Ltd.)
(14) Vulcanization accelerator: Nocceler NS (manufactured by OUCHI SHINKO

CHEMICAL INDUSTRIAL CO., LTD.)

Regarding unvulcanized rubber compositions obtained in Examples 1 to 3, and Comparative Examples 1 and 2, the following test was performed. Table 1 also shows the test results.

(Stickiness test)

Using a PICMATAC tester (manufactured by Toyo Seiki Seisaku-sho, Ltd.), a tacking force [N] of an unvulcanized rubber composition at a temperature of 23°C and a humidity of 55% was measured under the condition of a rising speed of 30mm/min and a measuring time of 2.5 seconds. Further, letting a stickiness index of the rubber composition of Comparative Example 1 as a standard compounding rubber composition to be 100, a tacking force was expressed by an index by the following calculating equation. A greater tackiness index indicates that a tacking force is greater, and more excellent.

$$- \text{ Stickiness index} = (\text{tacking force of each Example and each Comparative Example / tacking force of standard compounding}) \times 100$$

(Mooney viscosity index)

A Mooney viscosity of an unvulcanized rubber composition was measured at 130°C according to JIS K6300 and, letting the rubber composition of Comparative Example 1 as a standard compounding rubber composition to be 100, a Mooney viscosity was expressed by an index by the following calculating equation. A greater Mooney viscosity index indicates that a viscosity is lower, and processing is easier.

$$- \text{ Mooney viscosity index}$$
$$= (\text{Mooney viscosity of standard compounding rubber composition}) / (\text{Mooney viscosity of rubber composition of the present invention}) \times 100$$

<Examples 4 to 6, Comparative Examples 3 and 4: rubber composition for base tread>

According to compounding formulation shown in Table 2, and using a 1.7L Banbury mixer manufactured by KOBE STEEL, LTD, compounding components except for sulfur and a vulcanization accelerator were charged so that a charging rate became 58%, and the mixture was kneaded for 3 minutes at a rotation number of 80rpm until a temperature reached at 160°C. Then, to the resulting kneaded product were added sulfur and a vulcanization accelerator at compounding amounts shown in Table 2, the mixture was kneaded at 80°C for 5 minutes using an open roll to obtain unvulcanized rubber compositions of compounding related to Examples 4 to 6, and Comparative Examples 3 and 4.

## Table 2

| | | Example 4 | Example 5 | Example 6 | Comparative Example 3 | Comparative Example 4 |
|---|---|---|---|---|---|---|
| Compounding amount (part by mass) | Natural rubber | 100 | 100 | 80 | 100 | 100 |
| | Epoxidized natural rubber | - | - | 20 | - | - |
| | Carbon black | 5 | 5 | 5 | 5 | 5 |
| | Silica | 50 | 50 | 50 | 50 | 50 |
| | Silane Coupling agent | 4 | 4 | 4 | 4 | 4 |
| | Oil | 4 | 2 | 2 | 4 | 2 |
| | Resin (1) | - | - | - | 1 | 3 |
| | Resin (2) | 1 | 3 | 3 | - | - |
| | Wax | 1.5 | 1.5 | 1.5 | 1.5 | 1.5 |
| | Age resister | 2 | 2 | 2 | 2 | 2 |
| | Stearic acid | 2 | 2 | 2 | 2 | 2 |
| | Zinc oxide | 3 | 3 | 3 | 3 | 3 |
| | Sulfur | 1.5 | 1.5 | 1.5 | 1.5 | 1.5 |
| | Vulcanization Accelerator | 2.0 | 2.0 | 2.0 | 2.0 | 2.0 |
| Rubber processibility | Stickiness | 110 | 115 | 110 | 100 | 110 |
| | Reduction in viscosity | 110 | 115 | 110 | 100 | 100 |
| Rolling resistance property | | 100 | 90 | 90 | 100 | 90 |
| Operation stability | | 100 | 110 | 120 | 100 | 110 |

Details of various compounding components used in Examples 4 to 6, and Comparative Examples 3 and 4 are as follows.

(1) Natural rubber (NR): SIR (manufactured in Indonesia)
(2) Epoxidized natural rubber (ENR): ENR25 (manufactured by Malaysian Rubber Board) (epoxidization rate: 25%)
(3) Carbon black: Show Black N220 (manufactured by Cabot Japan K.K.)
(4) Silica: Ultrasil VN3 (manufactured by Evonik Degussa Japan Co., Ltd.) (BET specific surface area: 175 m$^2$/g)
(5) Silane coupling agent: Si266 (manufactured by Evonik Degussa Japan Co., Ltd.)
(6) Oil: NH60 (manufactured by Idemitsu Kosan Co., Ltd)
(7) Resin (1): Marcalets T100AS (manufactured by Maruzen Petrochemical Co., Ltd)
(8) Resin (2): Terpene resin PX300N (manufactured by YASUHARA CHEMICAL CO., LTD.)
(9) Wax: Sunnoc Wax (manufactured by OUCHI SHINKO CHEMICAL INDUSTRIAL CO., LTD.)
(10) Age resister: Nocrac 6C (manufactured by OUCHI SHINKO CHEMICAL INDUSTRIAL CO., LTD.) (N-(1,3-dimethylbutyl)-N'-phenyl-p-phenylenediamine))
(11) Stearic acid: Paulownia (manufactured by Nippon Oil & Fat Co., Ltd.)
(12) Zinc oxide: Zinc white (manufactured by MITSUI MINING & SMELTING CO., LTD.)
(13) Sulfur: powdery sulfur (manufactured by Tsurumi Chemical Co., Ltd.)
(14) Vulcanization accelerator: Nocceler NS (manufactured by OUCHI SHINKO

CHEMICAL INDUSTRIAL CO., LTD.)

Regarding unvulacanized rubber compositions obtained in Example 4 to 6, and Comparative Examples 3 and 4, the following test was performed. Tablet 2 also shows the test results.

(Stickiness test)

According to the same manner as described above except that a stickiness index of the rubber composition of Comparative Example 3 as a standard compounding rubber composition was 100, a tacking force was expressed by an index.

(Mooney viscosity index)

According to the same manner as described above except that the rubber composition of Comparative Example 3 as a standard compounding rubber composition was 100, a Mooney viscosity was expressed by an index.

(Rolling resistance property)

Using rubber compositions obtained in Examples 4 to 6, and Comparative Examples 3 and 4, test pieces having a size of 4.0mm (width) × 30mm (length) × 2.0mm (thickness) were prepared, a loss tangent (tanδ) was measured under the condition of a temperature of 70°C, an initial strain of 10%, and a dynamic strain of 2% using a viscoelasticity spectrometer (manufactured by IWAMOTO Quartz GlassLab Co., Ltd.) and, letting the rubber composition of Comparative Example 3 as a standard compounding rubber composition to be 100, rolling resistance property was expressed by an index by the following calculating equation. A greater rolling resistance property index indicates that rolling resistance property is higher.

$$\text{- Rolling resistance property index}$$
$$= (\tan\delta \text{ of Comparative Example 3}) / (\tan\delta \text{ of each compounding}) \times 100$$

(Operation stability)

Using rubber compositions obtained in Examples 4 to 6, and Comparative Examples 3 and 4, test pieces having a size of 4.0mm (width) × 30mm (length) × 2.0mm (thickness) were prepared, a complex modulus (E*) was measured under the condition of a temperature of 70°C, an initial strain of 10%, and a dynamic strain of 2% using a viscoelasticity spectrometer (manufactured by IWAMOTO Quartz GlassLab Co., Ltd.) and, letting the rubber composition of Comparative Example 3 as a standard compounding rubber composition to be 100, operation stability was expressed by an index by the following calculating equation. A greater operation stability index indicates that operation stability is better.

$$\text{-Operation stability index}$$
$$= (E^* \text{ of each compounding}) / (E^* \text{ of Comparative Example 3}) \times 100$$

<Examples 7 and 8, Comparative Examples 5 and 6: rubbers composition for tread>

According to compounding formulation shown in Table 3, and using a 1.7L Banbury mixer manufactured by KOBE STEEL, LTD, compounding components except for sulfur and a vulcanization accelerator were charged so that a charging rate became 58%, and the mixture was kneaded for 3 minutes at a rotation number of 80rpm until a temperature reached at 160°C. Then, to the resulting kneaded product were added sulfur and a vulcanization accelerator at compounding amounts shown in Table 3, and the mixture was kneaded at 80°C for 5 minutes using an open roll to obtain unvulcanized rubber compositions of compounding related to Examples 7 and 8, and Comparative Examples 5 and 6.

Table 3

| | | Example 7 | Example 8 | Comparative Example 5 | Comparative Example 6 |
|---|---|---|---|---|---|
| Compounding amount (part by mass) | Natural rubber | 30 | 30 | 30 | 30 |
| | Epoxidized natural rubber | 70 | 70 | 70 | 70 |
| | Carbon black | 5 | 5 | 5 | 5 |
| | Silica | 75 | 75 | 75 | 75 |
| | Silane Coupling agent | 6 | 6 | 6 | 6 |
| | Oil | 12 | 14 | 14 | 12 |
| | Resin (1) | - | - | 1 | 3 |
| | Resin (2) | 1 | 3 | - | - |
| | Wax | 1.5 | 1.5 | 1.5 | 1.5 |
| | Age resister | 2 | 2 | 2 | 2 |
| | Stearic acid | 2 | 2 | 2 | 2 |
| | Zinc oxide | 3 | 3 | 3 | 3 |
| | Sulfur | 1.5 | 1.5 | 1.5 | 1.5 |
| | Vulcanization Accelerator | 2.0 | 2.0 | 2.0 | 2.0 |
| Rubber processibility | Stickiness | 110 | 115 | 100 | 110 |
| | Reduction in viscosity | 110 | 115 | 100 | 100 |
| Gripping performance | Dry | 100 | 110 | 100 | 110 |
| | Wet | 100 | 100 | 100 | 100 |
| Abrasion resistance | | 100 | 98 | 100 | 98 |
| Rolling resistance property | | 100 | 95 | 100 | 95 |
| Heat generation property | | 100 | 95 | 100 | 95 |

Details of various compounding components used in Examples 7 and 8, and Comparative Examples 5 and 6 are as follows.

(1) Natural rubber (NR): SIR (manufactured in Indonesia)
(2) Epoxidized natural rubber (ENR): ENR25 (manufactured by Malaysian Rubber Board) (epoxidization rate: 25%)
(3) Carbon black: Show Black N220 (manufactured by Cabot Japan K.K.)
(4) Silica: Ultrasil VN3 (manufactured by Evonik Degussa Japan Co., Ltd.) (BET specific surface area: 175 $m^2/g$).
(5) Silane coupling agent: Si266 (manufactured by Evonik Degussa Japan Co., Ltd.)
(6) Oil: NH60 (manufactured by Idemitsu Kosan Co., Ltd)
(7) Resin (1): Marcalets T100AS (manufactured by Maruzen Petrochemical Co., Ltd)
(8) Resin (2): Terpene resin PX300N (manufactured by YASUHARA CHEMICAL CO., LTD.)
(9) Wax: Sunnoc Wax (manufactured by OUCHI SHINKO CHEMICAL INDUSTRIAL CO., LTD.)
(10) Age resister: Nocrac 6C (manufactured by OUCHI SHINKO CHEMICAL INDUSTRIAL CO., LTD.) (N-(1,3-dimethylbutyl)-N'-phenyl-p-phenylenediamine))
(11) Stearic acid: Paulownia (manufactured by Nippon Oil & Fat Co., Ltd.)
(12) Zinc oxide: Zinc white (manufactured by MITSUI MINING & SMELTING CO., LTD,
(13) Sulfur: powdery sulfur (manufactured by Tsurumi Chemical Co., Ltd.)
(14) Vulcanization accelerator: Nocceler NS (manufactured by OUCHI SHINKO

CHEMICAL INDUSTRIAL CO., LTD.)

Regarding unvulcanized rubber compositions obtained in Examples 7 and 8, and Comparative Examples 5 and 6, the following test was performed. Table 3 also shows the test results.

(Stickiness test)

According to the same manner as described above except that a stickiness index of the rubber composition of Comparative Example 5 as a standard compounding rubber composition was 100, a tacking force was expressed by an index.

(Mooney viscosity index)

According to the same manner as described above except that the rubber composition of Comparative Example 5 as a standard compounding rubber composition was 100, a Mooney viscosity was expressed by an index.

(Gripping performance)

Using rubber compositions obtained in Examples 7 and 8, and Comparative Examples 5 and 6, test pieces having a size of 4.0mm (width) x 30mm (length) x 2.0 mm (sickness) were prepared, a loss tangent (tanδ) was measured under the condition of a temperature of 30°C, an initial strain of 10%, and a dynamic strain of 2% regarding dry gripping performance, or under the condition of a temperature of 0°C, an initial strain 10%, and a dynamic strain of 2% regarding wet gripping performance using a viscoelasticity spectrometer (manufactured by IWAMOTO Quartz GlassLab Co., Ltd.) and, letting the rubber composition of Comparative Example 5 as a standard compounding rubber composition to be 100, gripping performance was expressed by an index by the following calculating equation. A greater gripping performance index indicates that gripping performance is better.

$$-\text{Gripping performance index-}$$
$$=(\text{tan}\delta \text{ of each compounding})/(\text{tan}\delta \text{ of Comparative Example 5}) \times 100$$

(Abrasion resistance)

Using rubber compositions obtained in Examples 7 and 8, and Comparative Examples 5 and 6, text pieces having a size of 49mm (outer diameter) x 5mm (stickiness) were prepared, an abrasion mass was measured under the condition of a temperature of 23°C, a load of 30N, and a slippage rate of 40% using a Lambourn abrasion testing machine (manufactured by Ueshima Seisakusho Co., Ltd.) according to the provision of JIS K-6246 and, letting the rubber composition of Comparative Example 5 as a standard compounding rubber composition to be 100, abrasion resistance was expressed by an index by the following calculating equation. A greater abrasion resistance index indicates that abrasion resistance is better.

$$-\text{Abrasion resistance index}$$
$$=(\text{Abrasion mass of Comparative Example 5})/(\text{abrasion mass of each compounding}) \times$$
$$100$$

(Rolling resistance property)

Using rubber compositions obtained in Examples 7 and 8, and Comparative Examples 5 and 6, test pieces having a size of 4.0mm (width) x 30mm (length) x 2.0mm (stickiness) are prepared, a loss tangent (tanδ) was measured under the condition of a temperature of 70°C, an initial strain of 10%, and a dynamic strain of 2% using a viscoelasticity spectrometer (manufactured by IWAMOTO Quartz GlassLab Co., Ltd.) and, letting the rubber composition of Comparative Example 5 as a standard compounding rubber composition to be 100, rolling resistance property was expressed by an index by the following calculating equation. A greater rolling resistance property index indicates that rolling resistance property is higher.

$$-\text{Rolling resistance property index}$$
$$=(\text{tan}\delta \text{ of Comparative Example 5})/(\text{tan}\delta \text{ of each compounding}) \times 100$$

(Heat generation property)

Using rubber compositions obtained in Examples 7 and 8, and Comparative Examples 5 and 6, test pieces having a size of 4.0mm (width) x 30mm (length) x 2.0mm (stickiness) were prepared, a loss compliance was measured under the conditions of a temperature of 100°C, and an initial strain of 10%, and a dynamic strain of 2% using a viscoelasticity spectrometer (manufactured by IWAMOTO Quartz GlassLab Co., Ltd.) and, letting the rubber composition of Comparative Example 5 as a standard compounding rubber composition to be 100, heat generation property was expressed by an index by the following calculating equation. A greater heat generation property index indicates that heat generation property is better.

-Heat generation property index

=(loss compliance of Comparative Example 5)/(loss compliance of each compounding) x

100

Comparative Example 6b Comparative Examples 7 and 8; rubber composition for carcass ply>

According to compounding formulation shown in Table 4, and using a 1.7L Banbury mixer manufactured by KOBE STEEL, LTD, compounding components except for sulfur and a vulcanization accelerator were charged so that a charging rate became 58%, and the mixture was kneaded for 3 minutes at a rotation number of 80rpm until a temperature reached at 140°C. Then, to the resulting kneaded product were added sulfur and a vulcanization accelerator at compounding amounts shown in Table 4, and the mixture was kneaded at 80°C for 5 minutes using an open roll to obtain unvulcanized rubber compositions of compounding related to Comparative Example 6b, and Comparative Examples 7 and 8.

Table 4

| | | Comparative Example 6b | Comparative Example 7 | Comparative Example 8 |
|---|---|---|---|---|
| Compounding amount (part by mass) | Natural rubber | 70 | 70 | 70 |
| | Epoxidized natural rubber | 30 | 30 | 30 |
| | Carbon black | 15 | 15 | 15 |
| | Silica | 50 | 50 | 50 |
| | Silane Coupling agent | 6 | 6 | 6 |
| | Oil | 15 | 15 | 15 |
| | Resin (1) | - | 3 | - |
| | Resin (2) | 3 | - | - |
| | Wax | 1.5 | 1.5 | 1.5 |
| | Age resister | 2 | 2 | 2 |
| | Stearic acid | 2 | 2 | 2 |
| | Zinc oxide | 3 | 3 | 3 |
| | Sulfur | 1.5 | 1.5 | 1.5 |
| | Vulcanization Accelerator | 2.0 | 2.0 | 2.0 |
| Rubber processibility | Stickiness | 110 | 100 | 65 |

Details of various compounding components used in Comparative Example 6b, and Comparative Examples 7 and 8 are as follows.

(1) Natural rubber (NR): RSS#3 (manufactured by Teck Bee Hung)
(2) Epoxidized natural rubber (ENR): ENR25 (manufactured by Kumpulan Guthrie Berhad) (epoxidization rate: 25%)

(3) Carbon black: Show Black N220 (manufactured by Cabot Japan K.K.)

(4) Silica: Ultrasil VN3 (manufactured by Evonik Degussa Japan Co., Ltd.)

(5) Silane coupling agent: Si69 (manufactured by Evonik Degussa Japan Co., Ltd.)

(6) Oil: NH60 (manufactured by Idemitsu Kosan Co., Ltd)

(7) Resin (1): Petroleum-based resin (Marcalets T100AS (manufactured by Maruzen Petrochemical Co., Ltd))

(8) Resin (2): Terpene resin (PX300N (manufactured by YASUHARA CHEMICAL CO., LTD.))

(9) Wax: Sunnoc Wax (manufactured by OUCHI SHINKO CHEMICAL INDUSTRIAL CO., LTD.)

(10) Age resister: Santflex 6PPD (manufactured by Flexsys)

(11) Stearic acid: Paulownia (manufactured by Nippon Oil & Fat Co., Ltd.)

(12) Zinc oxide: Zinc white (manufactured by MITSUI MINING & SMELTING CO., LTD.)

(13) Sulfur: powdery sulfur (manufactured by Tsurumi Chemical Co., Ltd.)

(14) Vulcanization accelerator: Nocceler NS (manufactured by OUCHI SHINKO

CHEMICAL INDUSTRIAL CO., LTD.)

Regarding uvulcanized rubber compositions obtained in Comparative Example 6b, and Comparative Examples 7 and 8, the following test was performed. Table 4 also shows the test results.

(Stickiness test)

A tacking force [N] of the unvulcanized rubber composition was measured under the condition of a measuring temperature of 20°C, a load of 4.9N, a standing time of 10 seconds, and a peeling rate of 30 mm/min using a PICMATAC tester (manufactured by Toyo Seiki Seisaku-sho, Ltd.) according to the provision of JIS-T 9233. Further, as a standard compounding rubber composition, letting a stickiness index of the rubber composition of Comparative Example 7 to be 100, a tacking force was expressed by an index by the following calculation and equation. A greater stickiness index indicates that a tacking force is greater, being excellent.

- Stickiness index = (tacking force of each Example and each Comparative Example/tacking force of standard compounding) × 100

<Example 10, Comparative Examples 9 and 10; rubber composition for bead apex>

According to compounding formulation shown in Table 5, and using a 1.7L Banbury mixer manufactured by KOBE STEEL, LTD, compounding components except for sulfur and a vulcanization accelerator were charged so that a charging rate became 58%, and the mixture was kneaded for 3 minutes at a rotation number of 80rpm until a temperature reached at 140°C. Then, to the resulting kneaded product were added sulfur and a vulcanization accelerator at compounding amounts shown in Table 5, and the mixture was kneaded at 80°C for 5 minutes using an open roll to obtain unvulcanized rubber compositions of compounding relative to Example 10, and Comparative Examples 9 and 10.

## Table 5

|  |  | Example 10 | Comparative Example 9 | Comparative Example 10 |
|---|---|---|---|---|
| Compounding amount (part by mass) | Natural rubber | 100 | 100 | 100 |
|  | Peptizing agent | 0.5 | 0.5 | 0.5 |
|  | Resin (1) | - | 3 | - |
|  | Resin (2) | 3 | - | - |
|  | Carbon black | 5 | 5 | 5 |
|  | Silica | 70 | 70 | 70 |
|  | Silane coupling agent | 5.6 | 5.6 | 5.6 |
|  | Age resister | 2 | 2 | 2 |
|  | Stearic acid | 2 | 2 | 2 |
|  | Zinc oxide | 4 | 4 | 4 |
|  | Sulfur | 2.4 | 2.4 | 2.4 |
|  | Vulcanization accelerator | 2.8 | 2.8 | 2.8 |
| Rubber processibility | Stickiness | 108 | 100 | 15 |

Details of various compounding components used in Example 10, and Comparative Examples 9 and 10 are as follows.

(1) Natural rubber (NR): RSS#3 (manufactured by Teck Bee Hung)
(2) Peptizing agent: Noctizer SD (manufactured by OUCHI SHINKO CHEMICAL INDUSTRIAL CO., LTD)
(3) Resin (1): Petroleum-based resin (Marcalets T100AS (manufactured by Maruzen Petrochemical Co., Ltd))
(4) Resin (2); Terpene-besed resin (PX300N (manufactured by YASUHARA CHEMICAL CO., LTD.))
(5) Carbon black: (Show Black N220 (manufactured by Cabot Japan K.K.)
(6) Silica : Ultrasil VN3 (manufactured by Evonik Degussa Japan Co., Ltd)
(7) Silane coupling agent: Si69 (manufactured by Evonik Degussa Japan Co., Ltd.)
(8) Age resister: Nocrac 6C (manufactured by OUCHI SHINKO CHEMICAL INDUSTRIAL CO., LTD.) (N-(1,3-dimethylbutyl)-N'-phenyl-p-phenylenediamine))
(9) Stearic acid: Paulomania (manufactured by Nippon Oil & Fat Co., Ltd.)
(10) Zinc oxide: Zinc white (manufactured by Mitsui MITSUI MINING & SMELTING CO., LTD.)
(11) Sulfur: powdery sulfur (manufactured by Tsurumi Chemical Co., Ltd.)
(12) Vulcanization accelerator: Nocceler NS (manufactured by OUCHI SHINKO CHEMICAL INDUSTRIAL CO., LTD.)

Regarding unvulcanized rubber compositions obtained in Example 10, and Comparative Examples 9 and 10, the following test was performed. Table 5 also shows the test results.

(Stickiness test)

A tacking force [N] of the unvulcanized rubber composition was measured under the condition of a measuring temperature of 20°C, a load of 4.9N, a standing time of 10 seconds, and a peeling rate of 30 mm/min using a PICMATAC tester (manufactured by Toyo Seiki Seisaku-sho, Ltd.) according to the provision of JIS-T 9233. Further, as a standard compounding rubber composition, letting a stickiness index of the rubber composition of Comparative Example 9 to be 100, a tacking force was expressed by an index by the following calculating equation. A greater stickiness index indicates that a tacking force is greater, being excellent.

- Stickiness index = (tacking force of each Example and each Comparative Example/tacking force of standard compounding) × 100

Although the present invention has been described and illustrated in detail, it is clearly understood that the same is by way of illustration and example only and is not to be taken by way of limitation, the scope of the present invention being interpreted by the terms of the appended claims.

**Claims**

1.  A rubber composition comprising a rubber component, carbon black, silica and at least any one of a terpene based resin and a rosin-based resin at 0.5 part by mass or more based on 100 parts by mass of said rubber component, wherein said rubber component contains a natural rubber component consisting of at least any one of a natural rubber and a modified natural rubber in a range of 20 to 100% by mass, and wherein the amount of carbon black is 5 parts by mass or less based on 100 parts by mass of said rubber component.

2.  The rubber composition according to claim 1, wherein the composition comprises 20 parts by mass or more silica.

3.  The rubber composition according to claim 1, wherein the modified natural rubber is an epoxidized natural rubber.

4.  The rubber composition according to claim 1, wherein said rubber component consists of said natural rubber component.

5.  The rubber composition according to claim 1, wherein the composition is for a clinch rubber.

6.  A pneumatic tire provided with a clinch rubber consisting of the rubber composition as described in claim 5.

7.  The rubber composition according to claim 1, wherein the composition is for a base tread.

8.  A pneumatic tire provided with a base tread part consisting of the rubber composition as described in claim 7.

9.  The rubber composition according to claim 1, wherein the composition is for a tread and comprises 45 parts by mass or more of silica based on 100 parts by mass of said rubber component.

10.  A pneumatic tire provided with a tread rubber consisting of the rubber composition as described in claim 9.

11.  The rubber composition according to claim 1, wherein the composition is for a carcass ply and comprises 20 to 60 parts by mass of silica based on 100 parts by mass of the rubber component.

12.  A pneumatic tire provided with a carcass ply constituted of the rubber composition described in claim 11, and a cord for a tire embedded in the rubber composition.

13.  The rubber composition according to claim 1, wherein the composition is for a bead apex and comprises 60 parts by mass or more of silica and 0.1 to 0.8 part by mass of a peptizing agent based on 100 parts by mass of the rubber component.

14.  A pneumatic tire provided with a bead apex consisting of the rubber composition as described in claim 13.

**Patentansprüche**

1.  Kautschukzusammensetzung enthaltend eine Kautschukkomponente, Ruß, Silica und wenigstens eines von einem auf Terpen basierendem Harz und einem auf Kolofonium basierenden Harz in einer Menge von 0,5 Massenteilen oder mehr bezogen auf 100 Massenteile der Kautschukkomponente, wobei die Kautschukkomponente eine Naturkautschukkomponente enthält, welche wenigstens einen von einem Naturkautschuk und einem modifizierten Naturkautschuk in einer Menge von 20 bis 100 Massen-% enthält, und wobei die Menge an Ruß 5 Massenteile oder weniger bezogen auf 100 Massenteile der Kautschukkomponente beträgt.

2.  Kautschukzusammensetzung nach Anspruch 1, wobei die Zusammensetzung 20 Massenteile oder mehr Silica enthält.

**3.** Kautschukzusammensetzung nach Anspruch 1, wobei der modifizierte Naturkautschuk ein epoxidierter Naturkautschuk ist.

**4.** Kautschukzusammensetzung nach Anspruch 1, wobei die Kautschukkomponente aus der Naturkautschukkomponente besteht.

**5.** Kautschukzusammensetzung nach Anspruch 1, wobei die Zusammensetzung für einen Clinch-Kautschuk ist.

**6.** Luftreifen mit einem Clinch-Kautschuk bestehend aus der Kautschukzusammensetzung nach Anspruch 5.

**7.** Kautschukzusammensetzung nach Anspruch 1, wobei die Zusammensetzung für eine Grundlauffläche ist.

**8.** Luftreifen mit einem Grundlaufflächenteilstück bestehend aus der Kautschukzusammensetzung nach Anspruch 7.

**9.** Kautschukzusammensetzung nach Anspruch 1, wobei die Zusammensetzung für eine Lauffläche ist und 45 Massenteile oder mehr Silica bezogen auf 100 Massenteile der Kautschukkomponente enthält.

**10.** Luftreifen mit einem Laufflächenkautschuk bestehend aus einer Kautschukzusammensetzung nach Anspruch 9.

**11.** Kautschukzusammensetzung nach Anspruch 1, wobei die Zusammensetzung für eine Karkassenlage ist und 20 bis 60 Massenteile Silica bezogen auf 100 Massenteile der Kautschukkomponente enthält.

**12.** Luftreifen mit einer Karkassenlage, welche aus der Kautschukzusammensetzung nach Anspruch 11 und mit einem Cord für einen Reifen eingebettet in der Kautschukzusammensetzung zusammengesetzt ist.

**13.** Kautschukzusammensetzung nach Anspruch 1, wobei die Zusammensetzung für einen Wulstkernreiter ist und 60 Massenteile oder mehr Silica und 0,1 bis 0,8 Massenteile eines Peptisiermittels bezogen auf 100 Massenteile der Kautschukkomponente enthält.

**14.** Luftreifen mit einem Wulstkernreiter bestehend aus der Kautschukzusammensetzung nach Anspruch 13.

**Revendications**

**1.** Composition de caoutchouc comprenant un composant caoutchouc, du noir de carbone, de la silice et au moins l'une quelconque d'une résine à base de terpène et d'une résine à base de colophane à raison de 0,5 partie en masse ou plus sur la base de 100 parties en masse dudit composant caoutchouc,
où ledit composant caoutchouc contient un composant caoutchouc naturel consistant en au moins l'un quelconque d'un caoutchouc naturel et d'un caoutchouc naturel modifié dans une plage de 20 à 100 % en masse, et
où la quantité de noir de carbone est 5 parties en masse ou moins sur la base de 100 parties en masse dudit composant caoutchouc.

**2.** Composition de caoutchouc selon la revendication 1, où la composition comprend 20 parties en masse ou plus de silice.

**3.** Composition de caoutchouc selon la revendication 1, où le caoutchouc naturel modifié est un caoutchouc naturel époxydé.

**4.** Composition de caoutchouc selon la revendication 1, où ledit composant caoutchouc consiste en ledit composant caoutchouc naturel.

**5.** Composition de caoutchouc selon la revendication 1, où la composition est destinée à un caoutchouc pour talon.

**6.** Pneumatique muni d'un caoutchouc pour talon consistant en la composition de caoutchouc telle que décrite dans la revendication 5.

**7.** Composition de caoutchouc selon la revendication 1, où la composition est destinée à une bande de roulement de base.

**8.** Pneumatique muni d'une partie bande de roulement de base consistant en la composition de caoutchouc telle que décrite dans la revendication 7.

**9.** Composition de caoutchouc selon la revendication 1, où la composition est destinée à une bande de roulement et comprend 45 parties en masse ou plus de silice sur la base de 100 parties en masse dudit composant caoutchouc.

**10.** Pneumatique muni d'un caoutchouc pour bande de roulement consistant en la composition de caoutchouc telle que décrite dans la revendication 9.

**11.** Composition de caoutchouc selon la revendication 1, où la composition est destinée à une couche de carcasse et comprend 20 à 60 parties en masse de silice sur la base de 100 parties en masse du composant caoutchouc.

**12.** Pneumatique muni d'une couche de carcasse constituée de la composition de caoutchouc décrite dans la revendication 11, et d'un câble pour pneumatique inclus dans la composition de caoutchouc.

**13.** Composition de caoutchouc selon la revendication 1, où la composition est destinée à un sommet de bourrelet et comprend 60 parties en masse ou plus de silice et 0,1 à 0,8 partie en masse d'un agent peptisant sur la base de 100 parties en masse du composant caoutchouc.

**14.** Pneumatique muni d'un sommet de bourrelet consistant en la composition de caoutchouc telle que décrite dans la revendication 13.

FIG.1

**REFERENCES CITED IN THE DESCRIPTION**

**Patent documents cited in the description**

- JP 11011106 A
- JP 2004002584 A
- JP 2006063093 A
- JP 2006249188 A
- JP 2007099932 A
- EP 1288022 A1
- EP 1288253 A1
- JP 2005248056 A
- EP 0941871 A2